# EUROPÄISCHE PATENTSCHRIFT

(11) **EP 3 172 465 B1**
(45) Veröffentlichungstag und Bekanntmachung des Hinweises auf die Patenterteilung: **18.09.2019**
(21) Anmeldenummer: 15724519.2
(22) Anmeldetag: 22.05.2015
(51) Int. Cl.: F16L 27/08, F16L 21/035, F16J 15/06

(54) **DREHBARE AXIAL SICHERNDE UND DRUCKFESTE LEITUNGSVERBINDUNG**
ROTATABLE AXIALLY SECURING AND PRESSURE-RESISTANT LINE CONNECTION
LIAISON DE CONDUITS ROTATIVE IMMOBILE AXIALEMENT ET RÉSISTANT À LA PRESSION

(30) Priorität: 24.07.2014 DE 102014010899
(43) Veröffentlichungstag der Anmeldung: 31.05.2017
(73) Patentinhaber: WABCO GmbH, 30453 Hannover (DE)
(72) Erfinder: BREDBECK, Klaus, 31628 Landesbergen (DE); FRANK, Dieter, 30171 Hannover (DE); VOGELSANG, Frank, 31582 Nienburg (DE)
(74) Vertreter: Lauerwald, Jörg
(86) Internationale Anmeldenummer: PCT/EP2015/001049
(87) Internationale Veröffentlichungsnummer: WO 2016/012065

(56) Entgegenhaltungen:
- WO-A1-03/050440
- DE-A1- 4 216 125
- FR-A- 1 473 169

## Beschreibung

Die Erfindung betrifft eine Verbindungsanordnung zur Bildung einer pneumatischen Verbindung gemäß Anspruch 1, ein Verfahren zur Bildung einer pneumatischen Verbindungsanordnung gemäß Anspruch 17 und ein Fahrzeug gemäß Anspruch 18.

Zum Abdichten von Spalten zwischen aneinandergrenzenden Flächen, insbesondere zwischen zwei Körpern, dienen Dichtungen in Form von sogenannten O-Ring-Dichtungen. Hierbei handelt es sich um Dichtungen, die in Aussparungen angeordnet und unter Vorspannung verbaut werden, so dass sie dichtend an zwei korrespondierenden Dichtflächen der Körper anliegen.

Wenn diese Dichtungen jedoch gegen große Drücke von Innen oder Außen arbeiten oder wirken müssen, besteht oftmals die Gefahr, dass die Dichtungselemente, insbesondere der O-Ring, aus ihren Aufnahmen oder Aussparungen herausgedrückt und in den Dichtspalt zwischen den beiden Körpern gedrückt oder gequetscht werden. Hierbei kann das Dichtelement dann beschädigt werden und seine Dichtwirkung verlieren. Auch werden solche Dichtungsanordnungen mit zunehmendem Druck undicht, da die Haltkraft zwischen den Körpern mit zunehmendem Druck abnimmt und damit auch die Dichtwirkung des Dichtelementes geringer wird.

Wünschenswert wäre es deshalb, ein Verfahren und eine Vorrichtung, insbesondere für Verbindungsanordnungen, die entlang ihrer Verbindungsachse durchströmbar sind, bereitzustellen, mit welchem/welcher die vorgenannten Nachteile beseitigt werden. Insbesondere das Bereitstellen einer Verbindungsanordnung, die ohne zusätzliche Mittel zum Befestigen der Anschlusskörper auskommt und die eine hohe Dicht- und Haltewirkung aufweist.

Aus der US-Patentschrift US 5,516,122 ist beispielsweise eine Dichtungsanordnung bekannt, mit welcher zwei (Anschluss-)Köper pneumatisch verbunden sind, die entlang ihrer Verbindungsachse durchströmbar sind. Bei der bekannten Dichtungsanordnung wird ein Dichtungsring in zwei Aussparungen in den beiden Anschlusskörpern angeordnet und dann unter Druckbeaufschlagung entlang der Verbindungsachse mit Hilfe einer Muffe oder eines Spannrings von Außen verspannt. Eine selbsthaltende Verspannung, insbesondere eine axiale Rastwirkung mit Hilfe des Dichtelements, zwischen den beiden Körpern, also ohne Muffe oder Spannring, ist nicht vorgesehen.

FR 1473169 offenbart eine Verbindungsanordnung und ein Verfahren zur Bildung einer Verbindungsanordnung gemäß dem Oberbegriff des Anspruchs 1 bzw. des Anspruchs 17.

Aufgabe der Erfindung ist es, eine verbesserte Verbindungsanordnung und ein verbessertes Verfahren zur Bildung einer Verbindungsanordnung, insbesondere für eine Verbindungsanordnung, die entlang ihrer Verbindungsachse durchströmbar ist, zur Verfügung zu stellen, mit der es erlaubt ist, eine dichtende Verbindung zwischen zwei Körpern bereitzustellen, die einen verbesserten Halt und eine verbesserte Dichtwirkung gegenüber den aus dem Stand der Technik bekannten Lösungen aufweist. Insbesondere ist es Aufgabe, die zwei Körper so anzuordnen, dass sie gegeneinander schwenkbar, insbesondere drehbar und dichtend miteinander verbunden sind. Noch mehr bevorzugt ist es Aufgabe der Erfindung, eine Verbindungsanordnung bereitzustellen, die mit zunehmendem Druck auf die zu verbindenden Körper eine zunehmende Haltekraft zwischen den Körpern aufweist, da bei zunehmendem Druck die Flächenlast und gleichzeitig der Bedarf an axialer Fixierkraft steigt.

Diese Aufgabe wird erfindungsgemäß durch die Verbindungsanordnung zur Bildung einer pneumatischen Verbindung nach Anspruch 1 und das Verfahren nach Anspruch 17 sowie das Fahrzeug nach Anspruch 18 gelöst. Die Gegenstände der abhängigen Unteransprüche beschreiben bevorzugte Ausgestaltungsformen des erfindungsgemäßen Gedankens.

Die Erfindung umfasst den Gedanken einer Verbindungsanordnung mit einem ersten und zweiten Anschlusskörper zur Bildung einer pneumatischen Verbindung entlang einer Verbindungsachse und mit einem Dichtelement zum Dichten eines die pneumatischen Verbindung umgebenden Dichtspaltes mit einer Längenerstreckung, die sich parallel zur Verbindungsachse erstreckt, wobei der erste und zweite Anschlusskörper entlang der Verbindungsachse pneumatisch durchströmbar sind, und der erste Anschlusskörper einen Durchbruch mit einem Querschnitt quer zur Verbindungsachse aufweist, wobei:
- der zweite Anschlusskörper zumindest teilweise in dem Durchbruch angeordnet ist;
- auf einer parallel zu der Verbindungsachse verlaufenden Außenseite des ersten Anschlusskörpers eine wenigstens abschnittsweise umlaufende erste Aussparung quer zur Verbindungsachse zur Aufnahme des Dichtelements gebildet ist;
- auf einer parallel zu der Verbindungsachse verlaufenden Innenseite des zweiten Anschlusskörpers eine wenigstens abschnittsweise umlaufende zweite Aussparung quer zur Verbindungsachse zur Aufnahme des Dichtelements gebildet ist;
- die erste und zweite Aussparung sich zumindest teilweise gegenüber liegen; und
- das Dichtelement in wenigstens einem Abschnitt eines Umfangraums zum rastenden Verbinden des ersten und zweiten Anschlusskörpers angeordnet ist, wobei der Umfangraum von der ersten und zweiten Aussparung gebildet ist.

Weiterhin umfasst die Erfindung den Gedanken eines Verfahrens zur Bildung einer Verbindungsanordnung entlang einer Verbindungsachse, insbesondere einer erfindungsgemäßen Verbindungsanordnung, mit einem ersten und zweiten Anschlusskörper und einem Dichtelement zum Dichten eines die pneumatischen Verbindung umgebenden Dichtspaltes mit einer Längenerstreckung, die sich parallel zur Verbindungsachse erstreckt, wobei der erste und zweite Anschlusskörper entlang der Verbindungsachse pneumatisch durchströmbar sind, und der erste Anschlusskörper einen Durchbruch mit einem Querschnitt quer zur Verbindungsachse aufweist, wobei:
- auf einer parallel zu der Verbindungsachse verlaufenden Außenseite des ersten Anschlusskörpers eine wenigstens abschnittsweise umlaufende erste Aussparung quer zur Verbindungsachse zur Aufnahme des Dichtelements gebildet ist;
- auf einer parallel zu der Verbindungsachse verlaufenden Innenseite des zweiten Anschlusskörpers eine wenigstens abschnittsweise umlaufende zweite Aussparung quer zur Verbindungsachse zur Aufnahme des Dichtelements gebildet ist; und das Verfahren folgende Schritte umfasst:
   - Anordnen des Dichtelements in der wenigstens abschnittsweise umlaufenden ersten Aussparung des ersten Anschlusskörpers;
   - Einführen des ersten Anschlusskörpers in den Durchbruch des zweiten Anschlusskörpers entlang der Verbindungsachse;
   - Verformen, insbesondere Komprimieren, des Dichtelements quer zur Verbindungsachse beim Einführen des ersten Anschlusskörpers in den Durchbruch entlang der Verbindungsachse; und
   - Expandieren, insbesondere Einrasten, des Dichtelements quer zur Verbindungsachse in einen Umfangraum, der von den sich zumindest teilweise gegenüber liegenden ersten und zweiten Aussparung gebildet wird.

Darüber hinaus umfasst die Erfindung den Gedanken eines Fahrzeuges mit einem Kompressor mit einem Durchbruch zur Bildung eines ersten Anschlusskörpers; und mit einem schwenkbaren Ansaugstutzen mit einem domartigen Innenraum und einem an einer Oberseite des domartigen Innenraums seitlich angeordneten Ansaugleitung zur Bildung eines zweiten Anschlusskörpers, die ausgebildet sind zur Bildung einer erfindungsgemäßen Verbindungsanordnung.

Im Folgenden wird das Konzept der Erfindung beispielhaft - ohne die Erfindung dabei einzuschränken - beschrieben.

Gemäß dem Konzept der Erfindung ist eine Verbindungsanordnung mit zwei Anschlusskörpern, insbesondere eine steckbare pneumatische Verbindung mit zwei Anschlusskörpern, die entlang ihrer Verbindungsachse pneumatisch durchströmbar sind, vorgesehen, mit welcher die beiden zu verbindenden Anschlusskörper mittels eines Dichtelementes, insbesondere einem elastischen Dichtelement, beispielsweise einem O-Ring, miteinander axial rastend verbunden werden. Das Dichtelement übt dabei eine radiale und axiale Haltekraft aus, so dass die beiden Anschlusskörper pneumatisch dicht miteinander verbunden sind.

Hierbei wird das Dichtelement zum Dichten eines Dichtspaltes zwischen den beiden Anschlusskörpern angeordnet. Der zu dichtende Dichtspalt weist dabei eine Längenerstreckung auf, die sich parallel zur Verbindungsachse erstreckt. Der Dichtspalt ist also zwischen den beiden Anschlusskörpern in Richtung der Verbindungsachse angeordnet, wobei die Anschlusskörper axial teilweise ineinander angeordnet, insbesondere ineinander gesteckt, werden. Beide Anschlusskörper, also der erste und zweite Anschlusskörper, sind entlang der Verbindungsachse axial pneumatisch durchströmbar. Auf Grund von Druckschwankungen, beispielsweise durch eine axiale Be- und Entlüften einer Druckluftanlage durch die beiden Anschlusskörper, wirken Kräfte auf die Anschlusskörper, welche die beiden Anschlusskörper entlang der Verbindungsachse - also axial - gegeneinander verschieben können. Mittels der axialen Haltekraft, die das Dichtelement auf die beiden Anschlusskörper ausübt, wird - gemäß dem Konzept der Erfindung - eine rastende pneumatische Verbindung bereitgestellt, die auch bei wechselnden Druckverhältnissen pneumatisch dicht ist.

Insbesondere sieht das erfindungsgemäße Konzept vor, dass Aussparungen in den zu verbindenden Anschlusskörpern gebildet sind, die sich im montierten Zustand der Verbindungsanordnung gegenüberliegen und so einen Umfangraum zur Aufnahme des Dichtelementes bilden. Mittels der Anschlusskörper und des Dichtelementes in den Aussparungen wird eine axial rastende Verbindung zwischen den beiden Anschlusskörpern bereitgestellt. Hierbei wird durch die vorgeschlagene Rastgeometrie eine axiale Haltekraft erzeugt, welche die beiden Anschlusskörper dichtend verbindet.

Wesentliche Vorteile der Erfindung sind u. a.:
- ein sicherer Halt zwischen den zu verbindenden (Anschluss-)Körpern,
- eine erhöhte Dichtwirkung zwischen den (Anschluss-)Körpern,
- die beiden (Anschluss-)Körper sind schwenkbar, insbesondere drehbar, gegeneinander, angeordnet,
- die Haltkraft zwischen den (Anschluss-)Körpern erhöht sich mit zunehmendem Druck auf die (Anschluss-)Körper,
- Leichte Montierbarkeit, sowie
- Zerstörungsfreie Demontage.

Diese und andere bevorzugte Ausgestaltungsformen der Erfindung sind Gegenstand der Unteransprüche und präzisieren sowohl die Anordnung als auch das Verfahren und Fahrzeug. Insbesondere sind bevorzugte Weiterbildungen Gegenstand der Unteransprüche und geben im Einzelnen vorteilhafte Möglichkeiten an, wie die/das oben erläuterte Verbindungsanordnung/Verfahren im Rahmen der Aufgabenstellung sowie hinsichtlich weiterer Vorteile zu realisieren bzw. auszugestalten sind.

Eine bevorzugte Ausgestaltung sieht vor, dass ein Durchmesser des Durchbruchs in Richtung der zweiten Aussparung quer zur Verbindungsachse verengend gebildet ist, von einem Einführdurchmesser, der größer als ein Außendurchmesser des Dichtelements im eingesetzten Zustand, bis zu einem Rastdurchmesser, der kleiner als der Außendurchmesser des Dichtelements im eingesetzten Zustand ist. Bei dieser bevorzugten Ausgestaltung ist eine Einführkontur in Form eines sich in radialer Richtung verengenden Durchbruches für das Dichtelement gebildet, mit welcher es erlaubt ist, dass Dichtelement bei der Montage der Verbindungsanordnung in behutsamer und schonender Weise vorzuspannen, ohne das das Dichtelement beim Zusammensetzen oder Zusammenstecken der Anschlusskörper beschädigt wird. Hierbei wird das Dichtelement beim Einführen des einen Anschlusskörpers in den anderen Anschlusskörper zunächst in radialer Richtung verformt, insbesondere komprimiert, und expandiert dann - in einrastender Weise - in den Umfangraum, der von den sich gegenüber liegenden Aussparung in den beiden Anschlusskörpern gebildet ist.

Bevorzugt sieht eine Ausgestaltung vor, dass der erste und zweite Anschlusskörper konfiguriert sind, eine pneumatische Druckquelle und eine pneumatische Drucksenke zu verbinden. Bei einer pneumatischen Druckquelle kann es sich beispielsweise um einen Kompressor, insbesondere einen mit einem Motor angetriebenen Kompressor, eines Fahrzeuges handeln. Die pneumatische Drucksenke wird dann von einer Luftzuführung oder einem Luftansauganschluss des Kompressors, insbesondere einer Ansaugleitung, gebildet.

Bei einer zweckmäßigen Ausgestaltung kann vorgesehen sein, dass der Durchbruch im zweiten Anschlusskörper als ein kreisförmiger Durchbruch, insbesondere als eine Bohrung, gebildet ist. Diese Ausgestaltungsform ist in besonders einfacher Weise umzusetzen und erlaubt, dass die beiden pneumatischen Anschlusskörper, nämlich der erste und zweite Anschlusskörper, bei der Bildung einer Verbindungsanordnung drehbar gegeneinander angeordnet sind. Eine bevorzugte Weiterbildung sieht vor, dass das Dichtelement ein O-Ring ist. Hierbei handelt es sich bevorzugt um Standard-O-Ringe, die als ringförmige Dichtelemente gebildet sind und die dann in der umlaufenden, kreisförmigen ersten und zweiten Aussparung des ersten und zweiten Anschlusskörpers, insbesondere im dem Umfangraum, zum Abdichten des Dichtspaltes zwischen den beiden Anschlusskörpern angeordnet werden.

Bei einer vorteilhaften Ausgestaltung kann es vorgesehen sein, dass die Innenseite des zweiten Anschlusskörpers im Bereich des verengenden Durchmessers sich tangential an die Außenseite des ersten Anschlusskörpers annähert. Bei dieser Ausgestaltungsform ist eine Einführkontur am ersten Anschlusskörper vorgesehen, wobei sich die Innenseite des ersten Anschlusskörpers beispielsweise kreisförmig oder parabelförmig an die Außenseite des zweiten Anschlusskörpers annähert. Diese Ausgestaltung hat den Vorteil, dass beim Zusammensetzen, Zusammenstecken oder Montieren der Verbindungsanordnung das Dichtelement, insbesondere der O-Ring, besonders schonend vorgespannt oder komprimiert wird, ohne dass dieser hierbei beschädigt wird, in Form von Rissen, Quetschungen oder sonstigen Beschädigungen des Dichtelementes und/oder der Oberfläche des Dichtelementes.

Eine bevorzugte Weiterbildung sieht vor, dass die Querschnittsfläche des zweiten Anschlusskörpers im Bereich des sich verengenden Durchmessers eine Form eines Teilkreises mit dem Radius r aufweist. Hierbei nähert sich die Außenseite des zweiten Anschlusskörpers auf eine Kreisbahn, also kreisförmig an die Außenseite des ersten Anschlusskörpers an. Diese Ausgestaltung erlaubt eine Montage der Verbindungsanordnung, die für das Dichtelement besonders schonend ist. Beim Zusammenführen der beiden Anschlusskörper, wird das Dichtelement durch den sich kreisförmig verengenden Durchbruch im zweiten Anschlusskörper kontinuierlich und schonend komprimiert oder vorgespannt und expandiert anschließend schlagartig zu einer rastenden Verbindung zwischen ersten und zweiten Anschlusskörper, sobald sich die erste und zweite Aussparung im ersten und zweiten Anschlusskörper gegenüberliegen.

Eine Weiterbildung kann vorsehen, dass die Innenseite des zweiten Anschlusskörpers, insbesondere im Bereich des Durchbruches, eine Widerhakenkontur aufweist. In dieser bevorzugten Ausgestaltungsform ist auf der Innenseite des zweiten Anschlusskörpers, insbesondere im Bereich des Durchbruches, eine Widerhakenkontur gebildet, die für einen besonders starken Halt zwischen dem ersten und zweiten Anschlusskörper sorgt. Die Widerhakenkontur kann beispielsweise derart gebildet sein, dass sich die Aussparung auf der Innenseite des zweiten Anschlusskörpers zum unteren Ende der Aussparung hin erweitert. Bei dieser Ausgestaltung sind die Wände der zweiten Aussparung im zweiten Anschlusskörper also schräg angeordnet. Eine derartige Widerhakenkontur bewirkt, insbesondere beim Auftreten von hohen Druck- oder Zugkräften auf den ersten und/oder zweiten Anschlusskörper, ein Verkrallen des zweiten Anschlusskörpers in das Dichtelement, so dass ein sicherer Halt zwischen ersten und zweiten Verbindungskörper gebildet wird. Diese hat weiter den Vorteil, dass mit zunehmender Druck- oder Zugkraft die Haltekraft zwischen den Verbindungskörpern verstärkt wird. Eine andere mögliche Ausgestaltung einer Widerhakenkontur, kann vorsehen, dass im Bereich der zweiten Aussparung ein oder mehrere Haken gebildet sind.

Bevorzugt sieht eine Ausgestaltung vor, dass der erste Anschlusskörper mit einem domartigen Innenraum und einem an einer Oberseite des domartigen Innenraums seitlich angeordneten pneumatischen Verbindungsanschluss gebildet ist. Hierbei ist der erste Anschlusskörper bevorzugt als ein Ansaugstutzen für einen Kompressor eines Fahrzeuges gebildet.

Eine bevorzugte Ausgestaltungsform betrifft eine Verbindungsanordnung, bei welcher das Dichtelement mit einem elastischen oder teilelastischen Material gebildet ist. Je nach Ausführungsform und Anforderungen, beispielsweise an die Beständigkeit gegenüber Hitze, werden unterschiedliche Materialien eingesetzt, insbesondere verschiedene Kautschuk-Arten, Perfluorkautschuk (FFKM oder FFPM), Polyethylen (PE) oder Polytetrafluorethylen (PTFE). Darüber hinaus kann es vorgesehen sein, dass das Dichtelement, insbesondere der Dichtungs-O-Ring, eine Seele aus einem Metall aufweist. In einer noch mehr bevorzugten Ausgestaltungsform ist das Dichtelement mit einem teilelastischen Material, wie zum Beispiel Thermoplastische Elastomere (TPE) gebildet

Eine vorteilhafte Ausgestaltungsform betrifft eine Verbindungsanordnung, bei welcher das Dichtelement in einem nicht verformten Zustand eine runde Querschnittsfläche aufweist. Andere Ausführungsbeispiele für Dichtelemente können ovale, elliptische oder eckige, insbesondere quadratische oder rechteckförmige, Querschnittsflächen aufweisen.

Eine besonders vorteilhafte Ausgestaltungsform betrifft eine Verbindungsanordnung, bei welcher die erste und zweite Aussparung als eine erste und zweite Nut, insbesondere als eine umlaufende Nut gebildet sind. Hierbei handelt es sich um eine umlaufende, längliche, winklige Vertiefung, die umlaufend auf der Außenseite bzw. Innenseite des ersten und zweiten Anschlusskörpers gebildet ist.

Bevorzugt sieht eine Ausgestaltung vor, dass eine erste Tiefenerstreckung quer zur Verbindungsachse der ersten Aussparung größer als eine zweite Tiefenerstreckung quer zur Verbindungsachse der zweiten Aussparung ist. Hierbei ist es insbesondere vorgesehen, dass die Aussparung im ersten Anschlusskörper tiefer als die korrespondierende Aussparung im zweiten Anschlusskörper ist, so dass das Dichtelement - entsprechend der größeren Tiefenerstreckung - mit einem größeren (An-)Teil in der Aussparung des ersten Anschlusskörpers angeordnet ist als in der Aussparung des zweiten Anschlusskörpers. Hierdurch ist ein sicherer Halt des Dichtelementes, insbesondere bei der Montage der Dichtungsanordnung, gewährleist, so dass das Dichtelement nicht verrutschen kann.

Eine bevorzugte Ausgestaltungsform betrifft eine Verbindungsanordnung, bei welcher eine erste Längserstreckung parallel zur Verbindungsachse der ersten Aussparung und eine zweite Längserstreckung parallel zur Verbindungsachse der zweiten Aussparung jeweils im Bereich von 2 bis 4 *mm* liegt, bevorzugt im Bereich von jeweils 3mm. Besonders bevorzugt ist die Aussparung quadratisch ausgeführt, d.h. die erste Längserstreckung und die zweite Längserstreckung weisen im wesentlichen die gleiche Länge auf und auch die Summe der Tiefe der ersten Tiefenerstreckung der ersten Aussparung und der Tiefe der zweiten Tiefenerstreckung der zweiten Aussparung weist im wesentliche dasselbe Längenmaß auf wie die erste und zweite Längserstreckung, insbesondere im Bereich von 3 mm.

Bei einer zweckmäßigen Ausgestaltung kann vorgesehen sein, dass das Dichtelement eine Shore-Härte zwischen 50 bis 60 shore, bevorzugt von 55 shore aufweist. Bei der Shore-Härteskala bedeutet ein hoher Wert eine hohe Härte.

Eine bevorzugte Weiterbildung sieht vor, dass der erste Anschlusskörper ein Ansaugstutzen und der zweite Anschlusskörper ein Kompressor eines Fahrzeuges ist. Bei dieser Ausgestaltungsform ist die Verbindungsanordnung in einem Fahrzeug, insbesondere einem PKW, angeordnet, wobei über den Ansaugstutzen Luft angesaugt und/oder entlüftet wird. Hierbei treten kurzzeitig Drücke von bis zu 3 bar auf. Auch kommt es beim Ansaugen zu leichten Unterdrücken. Die Verbindungsanordnung muss auch bei solchen Drücken dauerhaft abgedichtet sein, da sonst beim Ansaugen ungefilterte Luft, insbesondere feuchte Luft, in die Pneumatikanlage eindringt und zu einem Verschleiß und/oder sonstigen Schäden an der Pneumatikanlage führt.

Ausführungsbeispiele der Erfindung werden nachfolgend anhand der Figuren beschrieben. Diese sollen die Ausführungsbeispiele nicht notwendigerweise maßstäblich darstellen, vielmehr sind die Figuren, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden dargestellten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsbeispiele sowie anhand der folgenden Figuren. Im Einzelnen zeigen:
- Fig. 1: eine schematische Darstellung einer möglichen Ausgestaltungsform einer Verbindungsanordnung mit einem ersten und zweiten Anschlusskörper und mit einem Dichtelement zur Bildung einer pneumatischen Verbindung entlang einer Verbindungsachse; und
- Fig. 2: einen Teilbereich (gestrichelter Rahmen) der Ausgestaltungsform einer Verbindungsanordnung, wie sie in der Fig. 1 dargestellt ist.

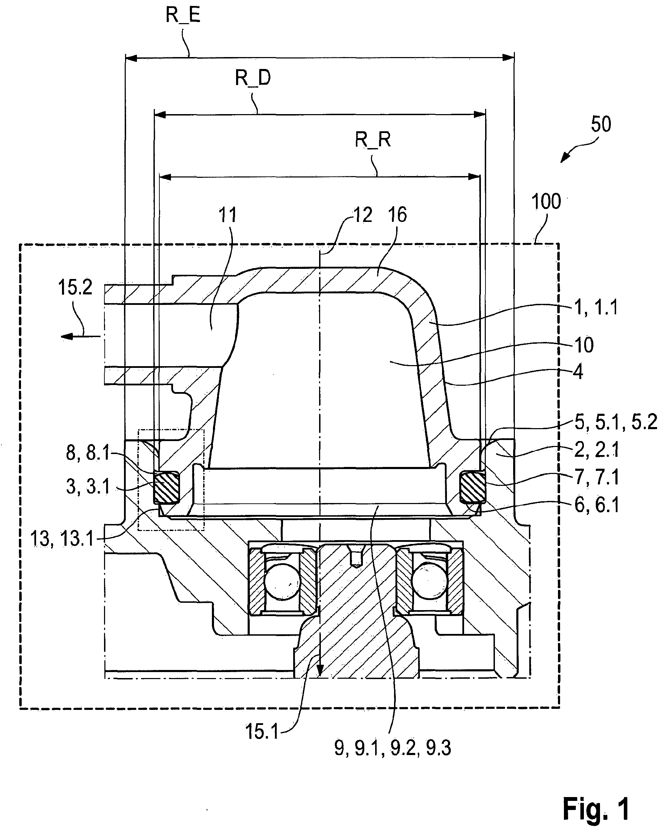

Fig. 1 zeigt eine schematische Darstellung einer bevorzugten Ausgestaltungsform einer Verbindungsanordnung 50 zur Bildung einer pneumatischen Verbindung zwischen einer pneumatische Druckquelle 14 und einer pneumatische Drucksenke 15, beispielsweise zwischen einem Kompressor 2.1 und einem schwenkbaren Ansaugstutzen 1.1 eines Fahrzeugs 100 (schematisch angedeutet).

Die vorliegende Verbindungsanordnung umfasst einen ersten und einen zweiten Anschlusskörper 1, 2 sowie ein Dichtelement 3, dass zwischen dem ersten und einen zweiten Anschlusskörper 1, 2 angeordnet ist. Der erste und zweite Anschlusskörper 1, 2 bilden entlang einer Verbindungsachse 12 eine pneumatische Verbindung. Zum Dichten und Verbinden, insbesondere zum dichtenden Verbinden, des Dichtspalts 13, der sich parallel zur Verbindungsachse 12 zwischen dem ersten und einen zweiten Anschlusskörper 1, 2 erstreckt, ist das Dichtelement 3, insbesondere ein O-Ring, vorgesehen.

Der erste und zweite Anschlusskörper 1, 2 sind entlang der Verbindungsachse 12 pneumatisch durchströmbar, wobei der zweite Anschlusskörper 2 einen Durchbruch 9, insbesondere ein kreisförmiger Durchbruch 9.2 oder eine Bohrung 9.3 entlang der Verbindungsachse 12 aufweist. Zur Bildung der pneumatischen Verbindung wird der erste Anschlusskörper 1 zumindest teilweise, insbesondere mit einer Welle, in dem Durchbruch 9 des zweiten Anschlusskörpers 2 angeordnet.

Auf einer Außenseite 4 des ersten Anschlusskörpers 1, die sich parallel zur Verbindungsachse 12 erstreckt, ist eine umlaufende erste Aussparung 6, insbesondere eine erste umlaufende erste Nut 6.1, quer zur Verbindungsachse gebildet. In der umlaufenden ersten Aussparung 6, insbesondere in der ersten umlaufenden Nut 6.1, wird das Dichtelement 3, insbesondere der O-Ring, aufgenommen. Das Dichtelement 3 weist dabei im eingesetzten Zustand einen Außendurchmesser von R_D auf.

Auf einer parallel zu der Verbindungsachse 12 umlaufenden Innenseite 5 des zweiten Anschlusskörpers 2 ist eine korrespondierende umlaufende zweite Aussparung 7, insbesondere eine zweite umlaufende Nut 7.1, quer zur Verbindungsachse 12 vorgesehen, die ebenfalls zur Aufnahme des Dichtelementes 3, insbesondere des O-Rings, dient.

Der Durchbruch 9 in zweiten Anschlusskörper 2, insbesondere die Bohrung 9.3 entlang der Verbindungsachse 12 im zweiten Anschlusskörper 2, weist einen Durchmesser 5.2 quer zur Verbindungsachse 12 auf, der sich in Richtung der zweiten Aussparung 7 verengt. Der sich verengende Durchmesser 5.2 des Durchbruches 9 bildet eine Einführkontur oder Einführhilfe, für die Montage oder Zusammenbau der Verbindungsanordnung. Während der Montage oder Zusammenbau der Verbindungsanordnung, insbesondere beim Einführen des ersten Anschlusskörpers 1 in den Durchbruch 9 des zweiten Anschlusskörpers 2, zur Bildung einer dichten pneumatischen Verbindung, wird das Dichtelement - angeordnet in der Aussparung 6 des ersten Anschlusskörpers 1 - schonend komprimiert und expandiert dann schlagartig zu einer rastenden Verbindung zwischen ersten und zweiten Anschlusskörper 1, 2, wenn sich die erste und zweite Aussparung 6, 7 gegenüberliegen.

Der Durchmesser 5.1 des Durchbruchs 9 ist vorliegend an seiner größten Weite mit einem Einführungsdurchmesser R_E gebildet, der sich in Richtung der zweiten Aussparung 7 bis zu einem Rastdurchmesser R_R verringert. Der Einführungsdurchmesser R_E ist dabei größer als der Außendurchmesser R_D des Dichtelements 3 im eingesetzten Zustand, und der Rastdurchmesser R_R ist kleiner als der Außendurchmesser R_D des Dichtelementes 3 im eingesetzten Zustand.

In der dargestellten Verbindungsanordnung liegen sich die erste Aussparung 6 im ersten Anschlusskörper 1 und die zweite Aussparung 7 im zweiten Anschlusskörper 2 gegenüber und bilden einen Umfangraum 8, in dem das Dichtelement 3 zum rastenden Verbinden zwischen ersten und zweiten Anschlusskörpers 1, 2 angeordnet ist.

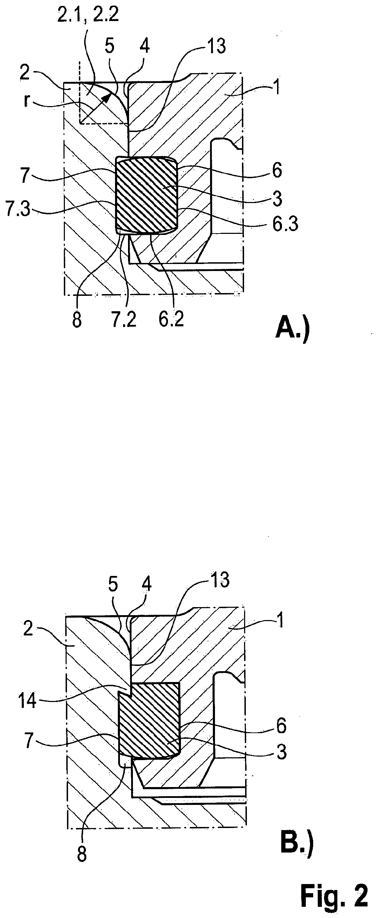

Die Fig. 2 zeigt eine schematische Darstellung eines Teilbereiches (gestrichelter Rahmen) der Ausgestaltungsform einer Verbindungsanordnung, wie sie in der Fig. 1 dargestellt und beschrieben ist, wobei zwei unterschiedliche Zustände oder Situation gezeigt werden, nämlich einmal eine Verbindungsanordnung, bei welcher auf die Anschlusskörper 1 und 2 keine Kräfte wirken (vgl. A.) in Fig. 2) und ein andersmal bei der auf die Anschlusskörper Kräfte wirken (vgl. B.) in Fig. 2).

Die Fig. 2 A.) zeigt den Zustand oder die Situation, in welcher der erste und zweite Anschlusskörper 1, 2 zusammen mit dem Dichtelement 3 eine Verbindungsanordnung bilden, wobei keine Kräfte auf den ersten oder zweiten Anschlusskörper entlang der Verbindungsachse 12 wirken.

Ebenfalls dargestellt ist ein Teilbereich des sich verengenden Durchbruches 9 im zweiten Anschlusskörper 2, insbesondere der Bohrung entlang der Verbindungsachse 12. Der sich verengenden Durchbruch 9, insbesondere der Rand des, Durchbruches 9, bildet eine Einführkontur für den ersten Anschlusskörper 1, insbesondere das Dichtelement 3 in der Aussparung 6 im ersten Anschlusskörper 1, wobei der zweite Anschlusskörper 2 einen sich zur zweiten Aussparung 7 hin verengenden Querschnitt aufweist, und die Querschnittsfläche 2.1 die Form eines Teilkreises 2.3 mit einem Radius r aufweist. Ohne Einschränkung der Erfindung können auch parabelförmige Querschnittsflächen oder Querschnittsflächen, die sich der Außenseite des ersten Anschlusskörpers 1 tangential annähern, vorgesehen sein. Eine runde oder parabelförmige Querschnittsfläche erleichtert das Zusammenfügen/die Montage der Verbindungsanordnung, wobei beim Einführen des ersten Anschlusskörpers 1 in den Durchbruch 9 des zweiten Anschlusskörpers 2 entlang der Verbindungsachse 12, das Dichtelement 3 schonend verformt, insbesondere quer zur Verbindungsachse 12 komprimiert wird und anschließend in die zweite Aussparung 7 des zweiten Anschlusskörpers 2 expandiert und so eine rastende Verbindung.

In der dargestellten Verbindungsanordnung ist eine erste Tiefenerstreckung 6.2 quer zur Verbindungsachse 12 der ersten Aussparung 6 im ersten Anschlusskörper 1 größer als eine zweite Tiefenerstreckung 7.2 quer zur Verbindungsachse 12 der zweiten Aussparung 7 im zweiten Anschlusskörper 2. Die erste und zweite Aussparung 6,7 weisen eine erste Längserstreckung 6.3 parallel zur Verbindungsachse 12 der ersten Aussparung 6 und eine zweite Längserstreckung 7.3 parallel zur Verbindungsachse 12 der zweiten Aussparung auf, die jeweils im Bereich von 2 bis 4 mm, insbesondere im Bereich von 3mm, liegt. Besonders bevorzugt ist die Summe der Tiefe der ersten Tiefenerstreckung 6.2 und der Tiefe der zweiten Tiefenerstreckung 7.2 im wesentlichen gleich der Länge der ersten Längserstreckung 6.3 bzw. der zweiten Längserstreckung 7.3 und liegt im Bereich von 2 bis 4 mm, insbesondere im Bereich von 3mm. Somit ergibt sich insgesamt ein im wesentlich quadratische Querschnittsfläche der gesamten Dichtungsaufnahme bestehend aus der ersten Aussparung 6 und der zweiten Aussparung 7 für die Aufnahme des Dichtelementes 3, insbesondere in Form eines O-Ringes 3.1.

In der Fig. 2 B.) ist ein(e) Zustand oder Situation dargestellt, bei welcher der erste und zweite Anschlusskörper 1, 2 zusammen mit dem Dichtelement 3 wiederum eine Verbindungsanordnung bilden, wobei diesmal aber eine Druck- oder Zugkraft entlang der Verbindungsachse 12 auf den ersten und/oder den zweiten Anschlusskörper 1, 2 wirkt. Unter dieser Kraft verschieben sich der erste und zweite Anschlusskörper gegeneinander und verformen das Dichtelement 3, wobei die rastende Verbindung zwischen dem ersten und zweiten Anschlusskörper 1, 2 nicht gelöst wird.

In einer bevorzugten Ausgestaltung der Verbindungsanordnung ist auf der Innenseite 5 des zweiten Anschlusskörpers 2, insbesondere im Bereich des Durchbruches 9, einer Widerhakenkontur 14 gebildet, die für einen besonders starken Halt zwischen dem ersten und zweiten Anschlusskörper 1, 2 sorgt. Die Widerhakenkontur 14 ist vorliegend dadurch gebildet, dass sich die Aussparung auf der Innenseite des zweiten Anschlusskörpers 2 zum unteren Ende der zweiten Aussparung 7 hin erweitert. Bei dieser Ausgestaltung sind die Wände (quer zur Verbindungsachse 12) der zweiten Aussparung 7 im zweiten Anschlusskörper 2 schräg nach Außen gebildet, so dass der Rand der Aussparung 7 einen Widerhaken oder eine Widerhakenkontur 14 bildet. Die Widerhakenkontur 14 bewirkt, insbesondere beim Auftreten von starken Druck- oder Zugkräften auf den ersten und/oder zweiten Anschlusskörper 1, 2, ein Verkrallen des zweiten Anschlusskörpers 2 in das Dichtelement 3, so dass ein sicherer Halt zwischen ersten und zweiten Verbindungskörper 1, 2 gebildet wird. Dies hat u. a. den Vorteil, dass mit zunehmender Druck- oder Zugkraft die Haltekraft zwischen den Verbindungskörper erhöht wird. Eine andere mögliche Ausgestaltung einer Widerhakenkontur kann aber auch in Form von einem oder mehrerer Haken gebildet sein, welche im Bereich der zweiten Aussparung gebildet sind.

### Bezugszeichenliste (Bestandteil der Beschreibung)

- 1: Erster Anschlusskörper
- 1.1: Ansaugstutzen
- 2: Zweiter Anschlusskörper
- 2.1: Kompressor
- 2.2: Querschnittsfläche
- 2.3: Teilkreises
- 3: Dichtelement
- 3.1: O-Ring
- 4: Außenseite des ersten Anschlusskörpers 1
- 5: Innenseite des zweiten Anschlusskörpers 2
- 5.1: Bereich des verengenden Durchmessers 5.2
- 5.2: Durchmesser
- 6: Erste Aussparung im ersten Anschlusskörper 1
- 6.1: Erste Nut
- 6.2: Erste Tiefenerstreckung der ersten Aussparung
- 6.3: Erste Längserstreckung der ersten Aussparung
- 7: Zweite Aussparung im zweiten Anschlusskörper 2
- 7.1: Zweite Nut
- 7.2: Zweite Tiefenerstreckung der zweiten Aussparung
- 7.3: Zweite Längserstreckung der zweiten Aussparung
- 8: Umfangraum
- 8.1: Abschnitt des Umfangraums
- 9: Durchbruch im zweiten Anschlusskörper 2
- 9.1: Querschnitt des Durchbruchs
- 9.2: Kreisförmiger Durchbruch
- 9.3: Bohrung
- 10: Domartigen Innenraum
- 11: Pneumatischen Verbindungsabschluss
- 12: Verbindungsachse
- 13: Dichtspalt
- 14: Widerhakenkontur
- 15.1: Druckquelle
- 15.2: Drucksenke
- 16: Oberseite des domartigen Innenraums
- 50: Verbindungsanordnung
- 100: Fahrzeug
- r: Radius
- R_E: Einführdurchmesser
- R_D: Außendurchmesser des Dichtelements 3
- R_R: Rastdurchmesser

## Patentansprüche

1. Verbindungsanordnung (50) mit einem ersten und zweiten Anschlusskörper (1,2) zur Bildung einer pneumatischen Verbindung entlang einer Verbindungsachse (12) und mit einem Dichtelement (3) zum Dichten eines die pneumatischen Verbindung umgebenden Dichtspaltes (13) mit einer Längenerstreckung, die sich parallel zur Verbindungsachse (12) erstreckt, wobei der erste und zweite Anschlusskörper (1,2) entlang der Verbindungsachse (13) pneumatisch durchströmbar sind, und der zweite Anschlusskörper (2) einen Durchbruch (9) mit einem Querschnitt (9.1) quer zur Verbindungsachse (12) aufweist, wobei
- der erste Anschlusskörper (1) zumindest teilweise in dem Durchbruch (9) angeordnet ist;
- auf einer parallel zu der Verbindungsachse (12) verlaufenden Außenseite (4) des ersten Anschlusskörpers (1) eine wenigstens abschnittsweise umlaufende erste Aussparung (6) quer zur Verbindungsachse (12) zur Aufnahme des Dichtelements (3) gebildet ist;
- auf einer parallel zu der Verbindungsachse (12) verlaufenden Innenseite (5) des zweiten Anschlusskörpers (2) eine wenigstens abschnittsweise umlaufende zweite Aussparung (7) quer zur Verbindungsachse (12) zur Aufnahme des Dichtelements (3) gebildet ist, wobei sich die erste und zweite Aussparung (6, 7) zumindest teilweise gegenüber liegen, **dadurch gekennzeichnet, dass**
- eine erste Längserstreckung (6.3) parallel zur Verbindungsachse (12) der ersten Aussparung (6) und eine zweite Längserstreckung (7.3) parallel zur Verbindungsachse (12) der zweiten Aussparung (7) im Wesentlichen die gleiche Länge aufweisen und die Summe der Tiefe einer ersten Tiefenerstreckung (6.2) der ersten Aussparung (6) quer zur Verbindungsachse (12) der ersten Aussparung (6) und der Tiefe einer zweiten Tiefenerstreckung (7.2) der zweiten Aussparung quer zur Verbindungsachse (12) der zweiten Aussparung (7) im wesentlichen dasselbe Längenmaß aufweisen wie die erste und zweite Längserstreckung (6.3, 7.3); und
- das Dichtelement (3) in wenigstens einem Abschnitt (8.1) eines Umfangraums (8) zum rastenden Verbinden des ersten und zweiten Anschlusskörpers (1,2) angeordnet ist, wobei der Umfangraum (8) von der ersten und zweiten Aussparung (6, 7) gebildet ist.

2. Verbindungsanordnung (50) nach Anspruch 1, **dadurch gekennzeichnet, dass** ein Durchmesser (5.2) des Durchbruchs (9) in Richtung der zweiten Aussparung (7) quer zur Verbindungsachse (12) verengend gebildet ist, von einem Einführdurchmesser (R_E), der größer als ein Außendurchmesser (R_D) des Dichtelements (3) im eingesetzten Zustand, bis zu einem Rastdurchmesser (R_R), der kleiner als der Außendurchmesser (R_D) des Dichtelements (3) im eingesetzten Zustand ist.

3. Verbindungsanordnung (50) nach Anspruch 1 öder 2, **dadurch gekennzeichnet, dass** der erste und zweite Anschlusskörper (1,2) konfiguriert sind eine pneumatische Druckquelle (15.1) und eine pneumatische Drucksenke (15.2) zu verbinden,

4. Verbindungsanordnung (50) nach zumindest einem der vorangehenden Ansprüche, **dadurch gekennzeichnet, dass** der Durchbruch (9) als ein kreisförmiger Durchbruch (9.2) einer Bohrung (9.3) gebildet ist.

5. Verbindungsanordnung (50) nach zumindest einem der vorangehenden Ansprüche, **dadurch gekennzeichnet, dass** das Dichtelement (3) ein O-Ring (3.1) ist.

6. Verbindungsanordnung (50) nach zumindest einem der vorangehenden Ansprüche, **dadurch gekennzeichnet, dass** die Innenseite (5) des zweiten Anschlusskörpers (2) im Bereich (5.1) des verengenden Durchmessers (5.2) sich tangential an die Außenseite (4) des ersten Anschlusskörpers (1) annähert.

7. Verbindungsanordnung (50) nach zumindest einem der vorangehenden Ansprüche, **dadurch gekennzeichnet, dass** eine Querschnittsfläche (2.1) des zweiten Anschlusskörpers (2) im Bereich des sich verengenden Durchmessers (5.2) eine Form eines Teilkreises (2.2) mit einem Radius (r) aufweist.

8. Verbindungsanordnung (50) nach zumindest einem der vorangehenden Ansprüche, **dadurch gekennzeichnet, dass** die Innenseite (5) des zweiten Anschlusskörpers (2), insbesondere im Bereich des Durchbruches (9) eine Widerhakenkontur (14) aufweist.

9. Verbindungsanordnung (50) nach zumindest einem der vorangehenden Ansprüche, **dadurch gekennzeichnet, dass** der erste Anschlusskörper (1) mit einem domartigen Innenraum (10) und einem an einer Oberseite (16) des domartigen Innenraums (10) seitlich angeordneten pneumatischen Verbindungsabschluss (11) gebildet ist.

10. Verbindungsanordnung (50) nach zumindest einem der vorangehenden Ansprüche, **dadurch gekennzeichnet, dass** das Dichtelement (3) mit einem elastischen oder teilelastischen Material gebildet ist.

11. Verbindungsanordnung (50) nach zumindest einem der vorangehenden Ansprüche, **dadurch gekennzeichnet, dass** das Dichtelement (3) in einem nicht verformten Zustand eine runde Querschnittsfläche aufweist.

12. Verbindungsanordnung (50) nach zumindest einem der vorangehenden Ansprüche, **dadurch gekennzeichnet, dass** die erste und zweite Aussparung (6, 7) als eine erste und eine zweite Nut (6.1, 7.1), jeweils als eine umlaufende Nut, gebildet sind.

13. Verbindungsanordnung (50) nach zumindest einem der vorangehenden Ansprüche, **dadurch gekennzeichnet, dass** die erste Tiefenerstreckung (6.2) größer als die zweite Tiefenerstreckung (7.2) ist.

14. Verbindungsanordnung (50) nach zumindest einem der vorangehenden Ansprüche, **dadurch gekennzeichnet, dass** die erste Längserstreckung (6.3) und die zweite Längserstreckung (7.3) jeweils im Bereich von 2 bis 4 *mm* liegt.

15. Verbindungsanordnung (50) nach zumindest einem der vorangehenden Ansprüche, **dadurch gekennzeichnet, dass** das Dichtelement (3) eine Shore-Härte zwischen 50 bis 60 Shore, bevorzugt von 55 Shore aufweist.

16. Verbindungsanordnung (50) nach zumindest einem der vorangehenden Ansprüche, **dadurch gekennzeichnet, dass** der erste Anschlusskörper (1) ein Ansaugstutzen (1.1) und der zweite Anschlusskörper (2) ein Kompressor (2.1) eines Fahrzeuges (100) ist.

17. Verfahren zur Bildung einer Verbindungsanordnung entlang einer Verbindungsachse (12), nämlich einer Verbindungsanordnung (50) nach einem der Ansprüche 1 bis 16, mit einem ersten und zweiten Anschlusskörper (1,2) und einem Dichtelement (3) zum Dichten eines die pneumatischen Verbindung umgebenden Dichtspaltes (13) mit einer Längenerstreckung (13.1), die sich parallel zur Verbindungsachse (12) erstreckt, wobei der erste und zweite Anschlusskörper (1,2) entlang der Verbindungsachse (13) pneumatisch durchströmbar sind, und der zweite Anschlusskörper (2) einen Durchbruch (9) mit einem Querschnitt (9.1) quer zur Verbindungsachse (12) aufweist, wobei
- auf einer parallel zu der Verbindungsachse (12) verlaufenden Außenseite (4) des ersten Anschlusskörpers (1) eine wenigstens abschnittsweise umlaufende erste Aussparung (6) quer zur Verbindungsachse (12) zur Aufnahme des Dichtelements (3) gebildet ist;
- auf einer parallel zu der Verbindungsachse (12) verlaufenden Innenseite (5) des zweiten Anschlusskörpers (2) eine wenigstens abschnittsweise umlaufende zweite Aussparung (7) quer zur Verbindungsachse (12) zur Aufnahme des Dichtelements (3) gebildet ist wobei sich die erste und zweite Aussparung (6, 7) zumindest teilweise gegenüber liegen; **dadurch gekennzeichnet, dass**
- eine erste Längserstreckung (6.3) parallel zur Verbindungsachse (12) der ersten Aussparung (6) und eine zweite Längserstreckung (7.3) parallel zur Verbindungsachse (12) der zweiten Aussparung (7) im Wesentlichen die gleiche Länge aufweisen und die Summe der Tiefe einer ersten Tiefenerstreckung (6.2) der ersten Aussparung (6) quer zur Verbindungsachse (12) der ersten Aussparung (6) und der Tiefe einer zweiten Tiefenerstreckung (7.2) der zweiten Aussparung quer zur Verbindungsachse (12) der zweiten Aussparung (7) im wesentlichen dasselbe Längenmaß aufweisen wie die erste und zweite Längserstreckung (6.3, 7.3); und
und das Verfahren folgende Schritte umfasst:
- Anordnen des Dichtelements (3) in der wenigstens abschnittsweise umlaufenden ersten Aussparung (6) des ersten Anschlusskörpers (1);
- Einführen des ersten Anschlusskörpers (1) in den Durchbruch (9) des zweiten Anschlusskörpers (2) entlang der Verbindungsachse (12);
- Verformen und Komprimieren des Dichtelements (3) quer zur Verbindungsachse (12) beim Einführen des ersten Anschlusskörpers (1) in den Durchbruch (9) entlang der Verbindungsachse (12); und
- Expandieren und Einrasten des Dichtelements (3) quer zur Verbindungsachse (12) in einen Umfangraum (8), der von den sich zumindest teilweise gegenüber liegenden ersten und zweiten Aussparung (6, 7) gebildet wird.

18. Fahrzeug (100), mit einem Kompressor (2.1) mit einem Durchbruch (9) in einem zweiten Anschlusskörper (2);
und mit einem schwenkbaren Ansaugstutzen (1.1) mit einem domartigen Innenraum (10) und einer an einer Oberseite (16) des domartigen Innenraums (10) seitlich angeordneten Ansaugleitung (11), welche einen ersten Anschlusskörper (1) ausbilden,
wobei der erste und der zweite Anschlusskörper (1, 2) mit einer Verbindungsanordnung (50) nach zumindest einem der Ansprüche 1 bis 16 ausgebildet sind.

## Claims

1. Connection arrangement (50) having a first and second connection body (1, 2) for forming a pneumatic connection along a connection axis (12) and having a sealing element (3) for sealing a sealing gap (13) which surrounds the pneumatic connection and which has a longitudinal dimension which extends parallel to the connection axis (12), wherein a pneumatic flow is able to travel through the first and second connection bodies (1, 2) along the connection axis (13), and the second connection body (2) has a through-hole (9) having a cross section (9.1) transversely to the connection axis (12), wherein
- the first connection body (1) is arranged at least partially in the through-hole (9);
- an at least partially circumferential first recess (6) transversely to the connection axis (12) is formed on an outer face (4) of the first connection body (1) extending parallel to the connection axis (12) for receiving the sealing element (3);
- an at least partially circumferential second recess (7) transversely to the connection axis (12) is formed on an inner face (5) of the second connection body (2) extending parallel to the connection axis (12) for receiving the sealing element (3), wherein the first and second recesses (6, 7) at least partially oppose one another; **characterized in that**
- a first longitudinal dimension (6.3) parallel to the connection axis (12) of the first recess (6) and a second longitudinal dimension (7.3) parallel to the connection axis (12) of the second recess (7) have substantially the same length and the sum of the depth of a first depth dimension (6.2) of the first recess (6) transversely to the connection axis (12) of the first recess (6) and the depth of a second depth dimension (7.2) of the second recess transversely to the connection axis (12) of the second recess (7) have substantially the same linear measurement as the first and second longitudinal dimensions (6.3, 7.3); and
- the sealing element (3) is arranged in at least one portion (8.1) of a circumferential chamber (8) for the latching connection of the first and second connection bodies (1, 2), wherein the circumferential chamber (8) is formed by the first and second recesses (6, 7).

2. Connection arrangement (50) according to Claim 1, **characterized in that** a diameter (5.2) of the through-hole (9) is formed so as to be narrowed in the direction of the second recess (7) transversely to the connection axis (12), from an insertion diameter (R_E) which is larger than an external diameter (R_D) of the sealing element (3) in the inserted state, as far as a latching diameter (R_R) which is smaller than the external diameter (R_D) of the sealing element (3) in the inserted state.

3. Connection arrangement (50) according to Claim 1 or 2, **characterized in that** the first and second connection bodies (1, 2) are configured to connect a pneumatic pressure source (15.1) and a pneumatic pressure sink (15.2).

4. Connection arrangement (50) according to at least one of the preceding claims, **characterized in that** the through-hole (9) is formed as a circular through-hole (9.2) of a bore (9.3).

5. Connection arrangement (50) according to at least one of the preceding claims, **characterized in that** the sealing element (3) is an O-ring (3.1).

6. Connection arrangement (50) according to at least one of the preceding claims, **characterized in that** the inner face (5) of the second connection body (2) in the region (5.1) of the narrowing diameter (5.2) approaches the outer face (4) of the first connection body (1) in a tangential manner.

7. Connection arrangement (50) according to at least one of the preceding claims, **characterized in that** a cross-sectional surface (2.1) of the second connection body (2) in the region of the narrowing diameter (5.2) has the shape of a pitch circle (2.2) with a radius (r).

8. Connection arrangement (50) according to at least one of the preceding claims, **characterized in that** the inner face (5) of the second connection body (2), in particular in the region of the through-hole (9), has a barbed contour (14).

9. Connection arrangement (50) according to at least one of the preceding claims, **characterized in that** the first connection body (1) is formed by a dome-like interior (10) and a pneumatic connection end (11) arranged laterally on an upper face (16) of the dome-like interior (10).

10. Connection arrangement (50) according to at least one of the preceding claims, **characterized in that** the sealing element (3) is formed by a resilient or partially resilient material.

11. Connection arrangement (50) according to at least one of the preceding claims, **characterized in that** the sealing element (3) in a non-deformed state has a round cross-sectional surface.

12. Connection arrangement (50) according to at least one of the preceding claims, **characterized in that** the first and second recesses (6, 7) are formed as a first and a second groove (6.1, 7.1), in each case as a circumferential groove.

13. Connection arrangement (50) according to at least one of the preceding claims, **characterized in that** the first depth dimension (6.2) is larger than the second depth dimension (7.2).

14. Connection arrangement (50) according to at least one of the preceding claims, **characterized in that** the first longitudinal dimension (6.3) and the second longitudinal dimension (7.3) in each case is in the region of 2 to 4 mm.

15. Connection arrangement (50) according to at least one of the preceding claims, **characterized in that** the sealing element (3) has a Shore hardness of between 50 to 60 Shore, preferably of 55 Shore.

16. Connection arrangement (50) according to at least one of the preceding claims, **characterized in that** the first connection body (1) is a suction pipe (1.1) and the second connection body (2) is a compressor (2.1) of a vehicle (100).

17. Method for forming a connection arrangement along a connection axis (12), namely a connection arrangement (50) according to one of Claims 1 to 16, having a first and second connection body (1, 2) and having a sealing element (3) for sealing a sealing gap (13) which surrounds the pneumatic connection and which has a longitudinal dimension (13.1) which extends parallel to the connection axis (12), wherein a pneumatic flow is able to travel through the first and second connection bodies (1, 2) along the connection axis (13), and the second connection body (2) has a through-hole (9) having a cross section (9.1) transversely to the connection axis (12), wherein
- an at least partially circumferential first recess (6) transversely to the connection axis (12) is formed on an outer face (4) of the first connection body (1) extending parallel to the connection axis (12) for receiving the sealing element (3);
- an at least partially circumferential second recess (7) transversely to the connection axis (12) is formed on an inner face (5) of the second connection body (2) extending parallel to the connection axis (12) for receiving the sealing element (3), wherein the first and second recesses (6, 7) at least partially oppose one another; **characterized in that**
- a first longitudinal dimension (6.3) parallel to the connection axis (12) of the first recess (6) and a second longitudinal dimension (7.3) parallel to the connection axis (12) of the second recess (7) have substantially the same length and the sum of the depth of a first depth dimension (6.2) of the first recess (6) transversely to the connection axis (12) of the first recess (6) and the depth of a second depth dimension (7.2) of the second recess transversely to the connection axis (12) of the second recess (7) have substantially the same linear measurement as the first and second longitudinal dimensions (6.3, 7.3); and the method comprises the following steps:
- arranging the sealing element (3) in the at least partially circumferential first recess (6) of the first connection body (1);
- inserting the first connection body (1) into the through-hole (9) of the second connection body (2) along the connection axis (12);
- deforming and compressing the sealing element (3) transversely to the connection axis (12) when inserting the first connection body (1) into the through-hole (9) along the connection axis (12); and
- expanding and latching the sealing element (3) transversely to the connection axis (12) into a circumferential chamber (8) which is formed by the at least partially opposing first and second recesses (6, 7).

18. Vehicle (100), having a compressor (2.1) with a through-hole (9) in a second connection body (2);
and having a pivotable suction pipe (1.1) with a dome-like interior (10) and a suction line (11) arranged laterally on an upper face (16) of the dome-like interior (10) which form a first connection body (1), wherein the first and second connection bodies (1, 2) are configured with a connection arrangement (50) according to at least one of Claims 1 to 16.

## Revendications

1. Ensemble de liaison (50) comprenant un premier et un deuxième corps de raccordement (1, 2) servant à la formation d'une liaison pneumatique le long d'un axe de liaison (12) et un élément d'étanchéité (3) servant à l'étanchéité d'un interstice d'étanchéité (13) entourant la liaison pneumatique et présentant une étendue longitudinale qui s'étend parallèlement à l'axe de liaison (12), dans lequel le premier et le deuxième corps de raccordement (1, 2) peuvent être traversés pneumatiquement le long de l'axe de liaison (13), et le deuxième corps de raccordement (2) comprend un trou débouchant (9) présentant une section transversale (9.1) transversalement à l'axe de liaison (12), dans lequel
- le premier corps de raccordement (1) est disposé au moins partiellement dans le trou débouchant (9) ;
- un premier évidement (6) périphérique au moins sur certaines parties est formé transversalement à l'axe de liaison (12) pour recevoir l'élément d'étanchéité (3) sur un côté extérieur (4) du premier corps de raccordement (1) s'étendant parallèlement à l'axe de liaison (12) ;
- un deuxième évidement (7) périphérique au moins sur certaines parties est formé transversalement à l'axe de liaison (12) pour recevoir l'élément d'étanchéité (3) sur un côté intérieur (5) du deuxième corps de raccordement (2) s'étendant parallèlement à l'axe de liaison (12), dans lequel le premier et le deuxième évidement (6, 7) sont au moins partiellement en regard, **caractérisé en ce que**
- une première étendue longitudinale (6.3) parallèle à l'axe de liaison (12) du premier évidement (6) et une deuxième étendue longitudinale (7.3) parallèle à l'axe de liaison (12) du deuxième évidement (7) présentent sensiblement la même longueur et la somme de la profondeur d'une première étendue en profondeur (6.2) du premier évidement (6) transversalement à l'axe de liaison (12) du premier évidement (6) et de la profondeur d'une deuxième étendue en profondeur (7.2) du deuxième évidement transversalement à l'axe de liaison (12) du deuxième évidement (7) présente sensiblement la même dimension longitudinale que la première et la deuxième étendue longitudinale (6.3, 7.3) ; et
- l'élément d'étanchéité (3) est disposé dans au moins une partie (8.1) d'un espace périphérique (8) pour la liaison par encliquetage du premier et du deuxième corps de raccordement (1, 2), l'espace périphérique (8) étant formé par le premier et le deuxième évidement (6, 7).

2. Ensemble de liaison (50) selon la revendication 1, **caractérisé en ce qu'**un diamètre (5.2) du trou débouchant (9) est formé de manière à se rétrécir en direction du deuxième évidement (7) transversalement à l'axe de liaison (12), d'un diamètre d'insertion (R_E), qui est supérieur à un diamètre extérieur (R_D) de l'élément d'étanchéité (3) dans l'état inséré, à un diamètre d'encliquetage (R_R), qui est inférieur au diamètre extérieur (R_D) de l'élément d'étanchéité (3) dans l'état inséré.

3. Ensemble de liaison (50) selon la revendication 1 ou 2, **caractérisé en ce que** le premier et le deuxième corps de raccordement (1, 2) sont configurés pour relier une source de pression pneumatique (15.1) et un puits de pression pneumatique (15.2).

4. Ensemble de liaison (50) selon au moins l'une des revendications précédentes, **caractérisé en ce que** le trou débouchant (9) est formé en tant que trou débouchant circulaire (9.2) d'un alésage (9.3).

5. Ensemble de liaison (50) selon au moins l'une des revendications précédentes, **caractérisé en ce que** l'élément d'étanchéité (3) est un joint torique (3.1).

6. Ensemble de liaison (50) selon au moins l'une des revendications précédentes, **caractérisé en ce que** le côté intérieur (5) du deuxième corps de raccordement (2) dans la région (5.1) du diamètre (5.2) se rétrécissant se rapproche tangentiellement du côté extérieur (4) du premier corps de raccordement (1).

7. Ensemble de liaison (50) selon au moins l'une des revendications précédentes, **caractérisé en ce qu'**une surface en section transversale (2.1) du deuxième corps de raccordement (2) dans la région du diamètre (5.2) se rétrécissant présente la forme d'un arc de cercle (2.2) de rayon (r).

8. Ensemble de liaison (50) selon au moins l'une des revendications précédentes, **caractérisé en ce que** le côté intérieur (5) du deuxième corps de raccordement (2) présente, en particulier dans la région du trou débouchant (9), un contour en forme de barbe (14).

9. Ensemble de liaison (50) selon au moins l'une des revendications précédentes, **caractérisé en ce que** le premier corps de raccordement (1) est formé par un espace intérieur (10) de type dôme et un raccord de liaison pneumatique (11) disposé latéralement sur un côté supérieur (16) de l'espace intérieur (10) de type dôme.

10. Ensemble de liaison (50) selon au moins l'une des revendications précédentes, **caractérisé en ce que** l'élément d'étanchéité (3) est formé par un matériau élastique ou partiellement élastique.

11. Ensemble de liaison (50) selon au moins l'une des revendications précédentes, **caractérisé en ce que** l'élément d'étanchéité (3) présente, dans un état non déformé, une surface en section transversale ronde.

12. Ensemble de liaison (50) selon au moins l'une des revendications précédentes, **caractérisé en ce que** le premier et le deuxième évidement (6, 7) sont formés en tant que première et deuxième rainure (6.1, 7.1), respectivement en tant que rainure périphérique.

13. Ensemble de liaison (50) selon au moins l'une des revendications précédentes, **caractérisé en ce que** la première étendue en profondeur (6.2) est supérieure à la deuxième étendue en profondeur (7.2).

14. Ensemble de liaison (50) selon au moins l'une des revendications précédentes, **caractérisé en ce que** la première étendue longitudinale (6.3) et la deuxième étendue longitudinale (7.3) se situent respectivement dans la plage de 2 à 4 mm.

15. Ensemble de liaison (50) selon au moins l'une des revendications précédentes, **caractérisé en ce que** l'élément d'étanchéité (3) présente une dureté Shore comprise entre 50 et 60 Shore, de préférence de 55 Shore.

16. Ensemble de liaison (50) selon au moins l'une des revendications précédentes, **caractérisé en ce que** le premier corps de raccordement (1) est une tubulure d'aspiration (1.1) et le deuxième corps de raccordement (2) est un compresseur (2.1) d'un véhicule (100).

17. Procédé de formation d'un ensemble de liaison le long d'un axe de liaison (12), à savoir d'un ensemble de liaison (50) selon l'une des revendications 1 à 16, comprenant un premier et un deuxième corps de raccordement (1, 2) et un élément d'étanchéité (3) servant à l'étanchéité d'un interstice d'étanchéité (13) entourant la liaison pneumatique et présentant une étendue longitudinale (13.1) qui s'étend parallèlement à l'axe de liaison (12), dans lequel le premier et le deuxième corps de raccordement (1, 2) peuvent être traversés pneumatiquement le long de l'axe de liaison (13), et le deuxième corps de raccordement (2) comprend un trou débouchant (9) présentant une section transversale (9.1) transversalement à l'axe de liaison (12), dans lequel
- un premier évidement (6) périphérique au moins sur certaines parties est formé transversalement à l'axe de liaison (12) pour recevoir l'élément d'étanchéité (3) sur un côté extérieur (4) du premier corps de raccordement (1) s'étendant parallèlement à l'axe de liaison (12) ;
- un deuxième évidement (7) périphérique au moins sur certaines parties est formé transversalement à l'axe de liaison (12) pour recevoir l'élément d'étanchéité (3) sur un côté intérieur (5) du deuxième corps de raccordement (2) s'étendant parallèlement à l'axe de liaison (12), dans lequel le premier et le deuxième évidement (6, 7) sont au moins partiellement en regard, **caractérisé en ce que**
- une première étendue longitudinale (6.3) parallèle à l'axe de liaison (12) du premier évidement (6) et une deuxième étendue longitudinale (7.3) parallèle à l'axe de liaison (12) du deuxième évidement (7) présentent sensiblement la même longueur et la somme de la profondeur d'une première étendue en profondeur (6.2) du premier évidement (6) transversalement à l'axe de liaison (12) du premier évidement (6) et de la profondeur d'une deuxième étendue en profondeur (7.2) du deuxième évidement transversalement à l'axe de liaison (12) du deuxième évidement (7) présente sensiblement la même dimension longitudinale que la première et la deuxième étendue longitudinale (6.3, 7.3) ; et
le procédé comporte les étapes suivantes :
- disposition de l'élément d'étanchéité (3) dans le premier évidement (6), périphérique au moins sur certaines parties, du premier corps de raccordement (1) ;
- insertion du premier corps de raccordement (1) dans le trou débouchant (9) du deuxième corps de raccordement (2) le long de l'axe de liaison (12) ;
- déformation et compression de l'élément d'étanchéité (3) transversalement à l'axe de liaison (12) lors de l'insertion du premier corps de raccordement (1) dans le trou débouchant (9) le long de l'axe de liaison (12) ; et
- expansion et encliquetage de l'élément d'étanchéité (3) transversalement à l'axe de liaison (12) dans un espace périphérique (8) qui est formé par les premier et deuxième évidements (6, 7) au moins partiellement en regard.

18. Véhicule (100) comprenant un compresseur (2.1) doté d'un trou débouchant (9) dans un deuxième corps de raccordement (2) ;
et une tubulure d'aspiration pivotante (1.1) dotée d'un espace intérieur (10) de type dôme et d'une conduite d'aspiration (11) disposée latéralement sur un côté supérieur (16) de l'espace intérieur (10) de type dôme, lesquels forment un premier corps de raccordement (1), dans lequel le premier et le deuxième corps de raccordement (1, 2) sont réalisés de manière à présenter un ensemble de liaison (50) selon au moins l'une des revendications 1 à 16.
